# EUROPÄISCHE PATENTSCHRIFT

(11) **EP 1 717 133 B1**
(45) Veröffentlichungstag und Bekanntmachung des Hinweises auf die Patenterteilung: **28.05.2008**
(21) Anmeldenummer: 06004442.7
(22) Anmeldetag: 04.03.2006
(51) Int. Cl.: B62D 33/02

(54) **Elastische Runge für Nutzfahrzeuge**
Elastic stanchion for a goods vehicle
Rancher élastique pour camion

(30) Priorität: 27.04.2005 DE 102005019925
(43) Veröffentlichungstag der Anmeldung: 02.11.2006
(73) Patentinhaber: Railion Deutschland AG, 55116 Mainz (DE)
(72) Erfinder: Barnitzke, Jürgen, 04435 Schkeuditz (DE)
(74) Vertreter: Zinken-Sommer, Rainer

(56) Entgegenhaltungen:
- EP-B1- 0 592 556
- WO-A-88/09282
- WO-A-99/20485
- WO-A-02/098702
- US-A1- 2002 178 584

## Beschreibung

Die Erfindung betrifft Rungen zur Sicherung und Befestigung eines Ladeguts auf Nutzfahrzeugen und/oder Güterfahrzeugen.

Rungen sind senkrecht stehende, aus Stahl gefertigte profilierte Kragträger für Flachwagen. Rungen können in Rungentaschen eingesteckt werden, sog. Einsteck- Rungen, bzw. sind dreh- und arretierbar am Wagen befestigt, sog. Dreh-Rungen. Rungen dienen zur Sicherung und Befestigung des Ladeguts. Für Beförderung langer, in mehreren Lagen verladener Güter (Hohlprofile, Holz) werden auch Wagen mit speziell hohen, fest angeordneten Rungen mit eingebauter Niederbindeeinrichtung verwendet.

Rungen werden insbesondere in sog. Rungenwagen eingesetzt. Rungenwagen sind hierbei spezielle Güterwagen mit niedrigen abnehmbaren bzw. umklappbaren Stirn- und Seitenwänden und hölzernen oder eisernen Rungen vor allem zum Transport von Fahrzeugen, landwirtschaftlichen Maschinen und sonstigen sperrigen Gütern.

Aus EP 0 592 556 B1 bzw. DE 692 15 225 T2 sind Rungen bekannt, die mit wenigstens zwei Kanälen versehen sind, die durch wenigstens einen Kamm getrennt sind. Die Kanäle und Kämme erstrecken sich in Richtung der Längsachse der Runge.

Nachteil dieser Lösung ist jedoch insbesondere, dass häufig Beschädigungen an der Runge durch Einknicken des Hohlkörpers auftreten. Hierdurch muss zum einen die Runge ausgetauscht bzw. instandgesetzt werden und kann zum anderen Ladegut vom Güterwagen fallen.

Aus WO 88/09282 A ist ein Standrohr für Güterwagen bekannt, das aus zwei Sektionen besteht, die mit Hilfe von longitudinalen Führungs-Nuten zusammengesteckt und anschließend zusammengeschraubt oder genietet werden. Im Hohlraum zwischen den Sektionen kann eine Verstärkungssektion eingebracht werden, die ebenfalls von einer longitudinalen Nut geführt wird.

Aus EP 0 592 556 B1 ist eine Runge mit einer zugehörigen Verstärkung bekannt, bei der die Verstärkung den praktisch gleichen Querschnitt wie das Rungenprofil hat. Durch eine Öffnung im Querschnitt lässt sich die Verstärkung jedoch beim Einführen in die Runge elastisch verformen. Nach dem Einfügen federt die Verstärkung in ihre ursprüngliche Ausdehnung zurück und liegt somit eng im Inneren des Rungenprofils an.

Es ist somit Aufgabe der Erfindung, eine verbesserte Runge bereitzustellen, die einfach herzustellen und flexibel einsetzbar ist und ohne Beschädigungen mechanisch belastet werden kann.

Diese Aufgabe wird in Verbindung mit dem Oberbegriff des Anspruches 1 erfindungsgemäß durch die in Anspruch 1 angegebenen Merkmale gelöst.

Der Rungenkörper besteht hierbei aus einem Hohlkörper aus mindestens einer gepressten Halbschale. In den Hohlkörper sind Verstärkungen in Form von Hohlprofilen mit geringerem Querschnitt eingesetzt, die federnd an den Innenseiten des Hohlkörpers anliegen. Der Zwischenraum zwischen Rungenkörper und Hohlprofil ist mit einer aushärtbaren, elastischen Masse ausgegossen. Die aushärtbare, elastische Masse ist hierbei mit den Innenseiten der Holme und den eingesetzten Hohlprofilen verklebt. Hierdurch wird vorteilhaft erreicht, dass in der Vergussmasse entstehende Schubspannungen zur Erhöhung der Festigkeit der Runge beitragen.

Vorteil des erfindungsgemäßen Verfahrens ist, dass die Herstellung der Runge durch nur geringe Anzahl von Bauteilen und eine einfache Konstruktion in Form eines Hohlkörpers wesentlich vereinfacht wird.

Ein weiterer Vorteil ist, dass aufgrund der Anpassbarkeit des Rungenkörpers an beliebige Formen eine Austauschbarkeit mit anderen bekannten Konstruktionen gewährleistet ist.

Ansprüche 2 bis 8 beinhalten vorteilhafte Ausführungsbeispiele der erfindungsgemäßen Lösung aus Anspruch 1.

Nach Anspruch 2 besteht die Halbschale (1) und/oder (2) aus einem gepressten Formteil. Gepresste Formteile sind bekanntlich schnell und einfach herstellbar, so dass Herstellungskosten der Runge vermindert werden können.

Nach Anspruch 3 reichen die Verstärkungen nicht bis an die Rungenspitze. Hierdurch wird vorteilhaft erreicht, dass die Eigenmasse der Runge verringert wird.

Nach Anspruch 4 sind die zwei Halbschalen an den Längsseiten durch Schweißnähte miteinander verbunden. Hierdurch wird vorteilhaft erreicht, dass beide Halbschalen getrennt hergestellt werden können und auf einfache Art und Weise zu einem Hohlkörper verbunden werden können.

Nach Anspruch 5 ist die Runge an der Rungenspitze durch ein eingeschweißtes Abdeckblech verschlossen und nach Anspruch 6 am unteren Rungenende durch eine angeschweißte Platte verschlossen. Hierdurch wird vorteilhaft erreicht, dass der Hohlkörper insbesondere gegen das Eindringen von Feuchtigkeit und somit gegen Korrosion geschützt wird.

Nach Anspruch 7 sind die Verstärkungen in Form von vier Vierkanthohlprofilen ausgeführt. Hierdurch wird vorteilhaft erreicht, dass eine besonders hohe Stabilität der Runge gewährleistet werden kann.

Nach Anspruch 8 besteht die aushärtbare, elastische Masse insbesondere aus Polyurethan.

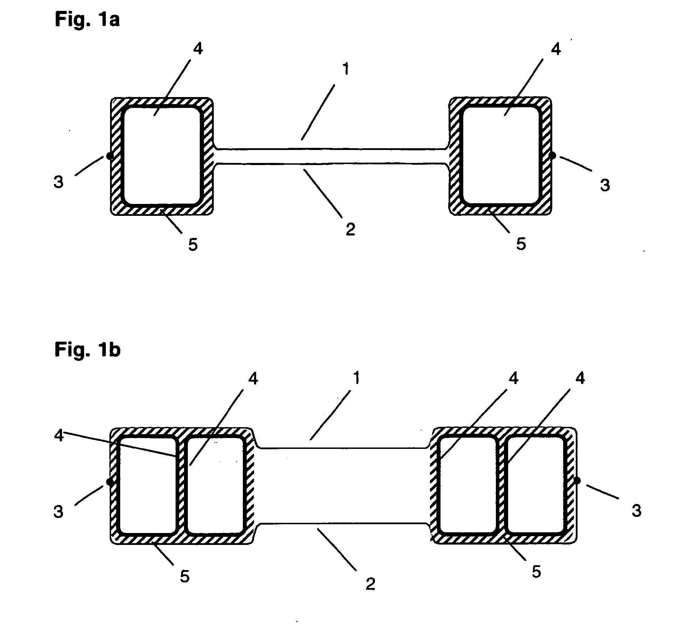

Die Erfindung wird nachstehend anhand von drei Ausführungsbeispielen und einer Zeichnung mit zwei Figuren näher erläutert. Die Figuren zeigen in
- **Fig. 1**: schematisch einen Querschnitt einer elastischen Runge in horizontaler Richtung und hierbei in
**Fig. 1a** Runge mit Verstärkung in Form von 2 Vierkanthohlprofilenmit ausgegossenem Zwischenraum,
**Fig. 1b** Runge mit Verstärkung in Form von 4 Vierkanthohlprofilen mit ausgegossenem Zwischenraum

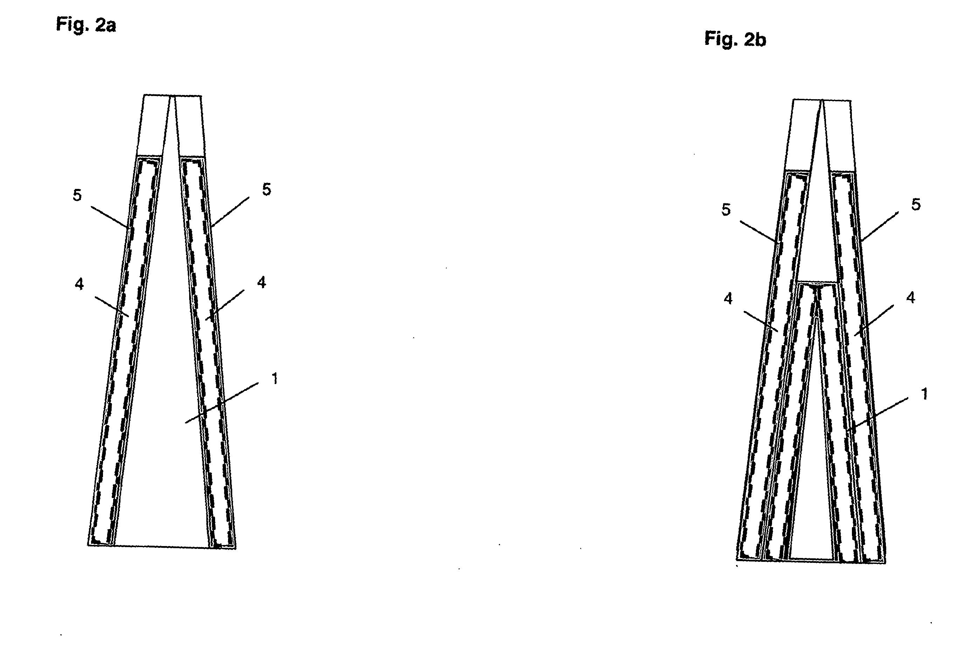

- **Fig. 2**: schematisch einen Querschnitt einer elastischen Runge in vertikaler Richtung und hierbei in
**Fig. 2a** Runge mit Verstärkung in Form von 2 Vierkanthohlprofilen mit ausgegossenem Zwischenraum,
**Fig. 2b** Runge mit Verstärkung in Form von 2 Vierkanthohlprofilen mit ausgegossenem Zwischenraum,

In einem Ausführungsbeispiel besteht der Rungenkörper aus zwei gepressten Halbschalen (1) und (2), die an den Längsseiten durch Schweißnähte (3) und im unteren Bereich durch Lochschweißung miteinander verbunden sind. Dadurch entstehen zwei Vierkanthohlprofile, sog. Holme, die durch einen Steg verbunden sind. In die Holme werden Vierkanthohlprofile (4) mit geringerem Querschnitt eingesetzt und durch geeignete Mittel, insbesondere Stege, fixiert. Diese Hohlprofile reichen nicht bis an die Rungenspitze. Der Zwischenraum wird mit einer aushärtbaren, elastischen Masse (5), insbesondere Polyurethan, ausgegossen, die mit den Innenseiten der Holme und den eingesetzten Hohlprofilen verklebt.

An der Rungenspitze sind die Holme durch Abschlussbleche verschlossen und die Stege miteinander verschweißt. Am unteren Rungenende sind die Stege miteinander verschweißt.

### Bezugszeichenliste

- 1: gepresste Halbschale
- 2: gepresste Halbschale
- 3: Schweißnaht
- 4: Verstärkung
- 5: aushärtbare, elastische Masse

## Patentansprüche

1. Runge zur Sicherung und Befestigung eines Ladeguts auf Nutzfahrzeugen und/oder Güterfahrzeugen, wobei der Rungenkörper aus einem Hohlkörper aus mindestens einer Halbschale (1, 2), besteht, und wobei in den Hohlkörper mindestens eine Verstärkung in Form eines Hohlprofiles (4) mit geringerem Querschnitt eingesetzt ist, **dadurch gekennzeichnet, dass** der Zwischenraum zwischen dem Hohlkörper und dem Hohlprofil mit einer aushärtbaren, elastischen Masse (5) ausgegossen ist, die mit den Innenseiten des Hohlkörpers und der Außenseite des mindestens einen eingesetzten Hohlprofiles (4) verklebt wobei das Hohlprofil federnd an den Innenseiten des Hohlkörpers anliegt.

2. Runge nach Anspruch 1 **dadurch gekennzeichnet, dass** die mindestens eine Halbschale (1) und/oder (2) aus einem gepressten Formteil besteht.

3. Runge nach mindestens einem der Ansprüche 1 bis 2, **dadurch gekennzeichnet, dass** die mindestens eine Verstärkung (4) nicht bis an die Rungenspitze reicht.

4. Runge nach mindestens einem der Ansprüche 1 bis 3, **dadurch gekennzeichnet, dass** zwei Halbschalen (1) und (2) an den Längsseiten durch Schweißnähte (3) verbunden sind.

5. Runge nach mindestens einem der Ansprüche 1 bis 4, **dadurch gekennzeichnet, dass** an der Rungenspitze die Runge durch ein eingeschweißtes Abdeckblech verschlossen ist.

6. Runge nach mindestens einem der Ansprüche 1 bis 5, **dadurch gekennzeichnet, dass** am unteren Rungenende die Runge durch eine angeschweißte Platte verschlossen ist.

7. Runge nach mindestens einem der Ansprüche 1 bis 6, **dadurch gekennzeichnet, dass** die Verstärkungen in Form von vier Vierkanthohlprofilen ausgeführt sind.

8. Runge nach mindestens einem der Ansprüche 1 bis 7, **dadurch gekennzeichnet, dass** die aushärtbare, elastische Masse (5) Polyurethan ist.

## Claims

1. A stake for securing and fastening goods loaded on utility vehicles and/or freight vehicles, wherein the stake body consists of a hollow body of at least one half-shell (1, 2), and wherein at least one reinforcement in the form of a hollow profile (4) of reduced cross section is inserted into the hollow body, **characterized in that** a thermosetting elastic mass (5) is cast into the intermediate space between the hollow body and the hollow profile and bonds to the inner sides of the hollow body and the outer side of the at least one inserted hollow profile (4), wherein the hollow profile resiliently adjoins the inner sides of the hollow body.

2. The stake according to Claim 1, **characterized in that** the at least one half-shell (1) and/or (2) consists of a pressed moulding.

3. The stake according to at least one of Claims 1 to 2, **characterized in that** the at least one reinforcement (4) does not extend up to the point of the stake.

4. The stake according to at least one of Claims 1 to 3, **characterized in that** two half-shells (1) and (2) are connected on the longitudinal sides by means of welding seams (3).

5. The stake according to at least one of Claims 1 to 4, **characterized in that** the stake is closed at the point of the stake by means of a welded-in cover plate.

6. The stake according to at least one of Claims 1 to 5, **characterized in that** the stake is closed at the lower end of the stake by means of a welded-on plate.

7. The stake according to at least one of Claims 1 to 6, **characterized in that** the reinforcements are realized in the form of four square hollow profiles.

8. The stake according to at least one of Claims 1 to 7, **characterized in that** the thermosetting elastic mass (5) consists of polyurethane.

## Revendications

1. Ranche pour le blocage et la fixation d'une marchandise transportée sur des véhicules utilitaires et/ou des véhicules de transport de marchandises, le corps de la ranche étant composé d'un corps creux fait d'au moins une demi-coque (1, 2) et au moins un renfort en forme de profilé creux (4) de faible section transversale étant inséré dans le corps creux, **caractérisée en ce que** l'intervalle (4) est garni d'une masse élastique durcissable (5) qui colle aux faces internes du corps creux et à la face extérieure de l'au moins un profilé creux inséré (4), le profilé creux reposant en suspension sur les faces internes du corps creux.

2. Ranche selon la revendication 1, **caractérisée en ce que** l'au moins une demi-coque (1) et/ou (2) est composée d'une pièce moulée pressée.

3. Ranche selon au moins une des revendications 1 à 2, **caractérisée en ce que** l'au moins un renfort (4) ne va pas jusqu'à la pointe de la ranche.

4. Ranche selon au moins une des revendications 1 à 3, **caractérisée en ce que** deux demi-coques (1) et (2) sont reliées au niveau de leurs faces longitudinales par des cordons de soudure (3).

5. Ranche selon au moins une des revendications 1 à 4, **caractérisée en ce que**, à la pointe de la ranche, la ranche est fermée par une tôle de recouvrement soudée.

6. Ranche selon au moins une des revendications 1 à 5, **caractérisée en ce que**, à l'extrémité inférieure de la ranche, la ranche est fermée par une plaque soudée dessus.

7. Ranche selon au moins une des revendications 1 à 6, **caractérisée en ce que** les renforts sont réalisés sous forme de profilés creux carrés.

8. Ranche selon au moins une des revendications 1 à 7, **caractérisée en ce que** la masse élastique durcissable (5) est du polyuréthane.
